# EUROPEAN PATENT APPLICATION

(11) **EP 4 507 412 A1**
(43) Date of publication of application: **12.02.2025**
(21) Application number: 23190803.9
(22) Date of filing: 10.08.2023
(51) Int. Cl.: H04W 64/00, H04W 36/00, H04W 36/36, H04W 88/04

(54) **SIDELINK POSITIONING PROCEDURE HANDLING DURING HANDOVER**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

A method for operating a location management apparatus (LMF#1), the method comprising: receiving (310), via an uplink channel, from a second radio terminal (UE#2, UE#1) a status message (S#2, S#1) indicating a detachment of a first radio terminal (UE#1, UE#2) from a first radio access node (gNB#1) that is associated with the location management apparatus (LMF#1), and indicating a continuation of a sidelink positioning procedure (SLP).

## Description

### Prior Art

The use of sidelink positioning in the context of V2X is a promising technology in the field of intelligent transportation systems. This technology aims to provide accurate and reliable location information to vehicles and infrastructure devices for improved safety and efficiency on the roads. With the increasing number of connected vehicles and the growing demand for real-time information exchange, sidelink positioning is gaining traction as a key solution for V2X communication.

### Disclosure of the invention

The problems of the prior art are solved by radio terminals, a location management apparatus and methods to operate said radio terminals and the location management apparatus according to the independent claims.

An aspect of the description is directed to the following subject matter: A first radio terminal comprising at least one processor; at least one memory including computer program code; and at least one radio communication module; the at least one processor, the at least one memory, the at least one computer program code, and the at least one radio communications module cause the first radio terminal to perform at least: receiving, via at least radio channel, from a location management apparatus or from a second radio terminal, a request indicating that the first radio terminal attached to a first radio access node takes part in at least one sidelink positioning procedure; starting the at least one sidelink positioning procedure, wherein the at least one sidelink positioning procedure is started as a network-assisted sidelink positioning procedure; detaching, during the sidelink positioning procedure, from the first radio access node associated with the location management function, LMF, upon a reception or activation of a handover trigger, wherein the handover trigger indicates a handover from the first radio access node, to a a second radio access node; terminating the at least one sidelink positioning procedure; and synchronizing to the second radio access node, upon termination of the at least one sidelink positioning procedure.

In general, the detachment or HO, handover, triggering can be based on any, or more than, one of the following: A) sent from the second radio tot he first (as written here);but also geographically (base don location information); and RSSI and other signal strength measurements.

Advantageously, handovers are taken care of by suppressing the immediate handover in favor of finalizing the sidelink positioning procedure during this exceptional out-of-coverage procedure starting with the detachment from the radio access node. Therefore, in particular a driving-safety relevant determination of a location or position of a vehicle or other road user can be determined with a higher level of determination confidence. Unwanted interruptions of the determination of location reports by handovers are reduced.

An advantageous example is characterized in that the first radio terminal further performs: transmitting, via a sidelink radio channel, a detachment message indicating a detachment of the first radio terminal from the first radio access node.

An advantageous example is characterized in that the first radio terminal further performs: detecting an indication of detachment of a first radio terminal, e.g., via measuring RSSI, geographical boundaries, handover conditions, etc., from the first radio access node.

Advantageously, the other radio terminals participating in the sidelink positioning procedure are informed.

An advantageous example is characterized in that the first radio terminal further performs: receiving, via the sidelink channel, at least one positioning message from the second radio terminal, the at least one positioning message originates from the location management apparatus.

Advantageously, even in the uncovered case for the second radio terminal the positioning procedure can continue.

An advantageous example is characterized in that the first radio terminal has a target role in the at least one sidelink positioning procedure, wherein the at least one sidelink positioning procedure is intended to determine location information indicating the position of the first radio terminal that has the target role, wherein a or the at least one second radio terminal has an anchor role in the at least one sidelink positioning procedure.

An advantageous example is characterized in that the first radio terminal has an anchor role in the at least one sidelink positioning procedure, wherein the at least one sidelink positioning procedure is intended to determine location information indicating the position of a second radio terminal that has a target role.

An advantageous example is characterized in that the first radio terminal further performs: selecting, upon detaching from the first radio access node, the radio terminal with the target role taking part in the sidelink positioning procedure to be a server for the at least one sidelink positioning procedure; and selecting or indicating the criteria of selecting, upon detaching from the first radio access node, the at least one radio terminal with the anchor role in the sidelink positioning procedure to be a respective slave for the at least one sidelink positioning procedure.

Advantageously, the role scheme of the sidelink positioning procedure is taken as a template for the out of coverage case. No further radio communication or selection scheme is necessary to seamlessly continue the sidelink positioning procedure.

An aspect of the description is directed to the following subject matter: A method for operating a first radio terminal, the method comprising: receiving, via at least radio channel, from a location management apparatus or from a second radio terminal, a request indicating that the first radio terminal attached to a first radio access node takes part in at least one sidelink positioning procedure; starting the at least one sidelink positioning procedure, wherein the at least one sidelink positioning procedure is started as a network-assisted sidelink positioning procedure; detaching, during the sidelink positioning procedure, from the first radio access node associated with the location management function, LMF, upon a reception or activation of a handover trigger, wherein the handover trigger indicates a handover the first radio access node to a second radio access node; terminating the at least one sidelink positioning procedure; and synchronizing to the second radio access node, upon termination of the at least one sidelink positioning procedure.

An aspect of the description is directed to the following subject matter: A second radio terminal comprising at least one processor; at least one memory including computer program code; and at least one radio communication module; the at least one processor, the at least one memory, the at least one computer program code, and the at least one radio communications module cause the second radio terminal to perform at least: receiving, via at least one radio channel, from a location management function or from a first radio terminal, a request indicating that the second radio terminal attached to a first radio access node, is taking part in at least one sidelink positioning procedure; starting the at least one sidelink positioning procedure, wherein the at least one sidelink positioning procedure is started as a network-assisted sidelink positioning procedure; receiving, via a sidelink radio channel, a detachment message indicating a detachment of the first radio terminal from the first radio access node; and terminating the at least one sidelink positioning procedure with the at least one first radio terminal as a participant in the sidelink positioning procedure.

Advantageously, the second radio terminal is aware of a detachment of the first radio terminal and continues the sidelink positioning procedure with the first radio terminal being in a partly covered or uncovered state. Therefore, with the first radio terminal in the exceptional out-of-coverage state the second radio terminal is aware of the exeptional out-of-coverage positioning method.

An advantageous example is characterized in that the second radio terminal further performs:
- transmitting, e.g., via an uplink channel, a status message indicating the detachment of the first radio terminal
- detected, by at least the first radio terminal using, e.g., RSSI measurements, handover conditions, etc., to be detaching
from the first radio access node, in particular from the first radio access node, and indicating the continuation of the sidelink positioning procedure.

Advantageously, the status message allows the receiving location management function to consider the detachment for its further actions.

An advantageous example is characterized in that the second radio terminal further performs: transmitting, e.g., via an uplink channel, a status message indicating the detachment of the first radio terminal from the first radio access node, and indicating the continuation of the sidelink positioning procedure.

An advantageous example is characterized in that the second radio terminal further performs: receiving, e.g., via a downlink channel, at least one positioning message intended for the at least one first radio terminal; and transmitting, via the sidelink channel, the at least one positioning message towards the at least one first radio terminal.

Advantageously, the in coverage second radio terminal maintains the sidelink position procedure active by forwarding the at least one positioning message.

An advantageous example is characterized in that the second radio terminal has a target role in the at least one sidelink positioning procedure, the at least one sidelink positioning procedure is intended to determine location information indicating the position of the second radio terminal that has the target role, wherein the at least one first radio terminal has an anchor role in the at least one sidelink positioning procedure.

An advantageous example is characterized in that the second radio terminal has an anchor role in the at least one sidelink positioning procedure, wherein the at least one sidelink positioning procedure is intended to determine location information indicating the position of the first radio terminal that has a target role.

An advantageous example is characterized in that the second radio terminal further performs: selecting, upon reception of the detachment message, the radio terminal with the target role in the at least one sidelink positioning procedure to be a server for the at least one sidelink positioning procedure; and selecting or indicating the selection rules, upon reception of the detachment message, the at least one radio terminal with the anchor role in the at least one sidelink positioning procedure to be a respective slave for the at least one sidelink positioning procedure.

Advantageously, the role scheme of the sidelink positioning procedure is taken as a template for the out of coverage or partly out-of-coverage case. No further radio communication or selection scheme is necessary to seamlessly continue the sidelink positioning procedure.

An aspect of the description is directed to the following subject matter: A method for operating a second radio terminal, the method comprising: receiving, via at least one radio channel, from a location management function or from a first radio terminal, a request indicating that the second radio terminal attached to a first radio access node, is taking part in at least one sidelink positioning procedure; starting the at least one sidelink positioning procedure, wherein the at least one sidelink positioning procedure is started as a network-assisted sidelink positioning procedure; receiving, via a sidelink radio channel, a detachment message indicating a detachment of the first radio terminal from the first radio access node; and terminating the at least one sidelink positioning procedure with the at least one first radio terminal as a participant in the sidelink positioning procedure.

An aspect of the description is directed to the following subject matter: A location management apparatus comprising at least one processor; at least one memory including computer program code; and at least one radio communication module; the at least one processor the at least one memory, the at least one computer program code, and the at least one radio communications module cause the location management apparatus to perform at least: Receiving, via an uplink channel, from a second radio terminal a status message indicating a detachment of a first radio terminal from a first radio access node that is associated with the location management apparatus, and indicating a continuation of a sidelink positioning procedure.

Advantageously, the location management function is aware of a detachment status of the first radio terminal upon receiving the status message.

An advantageous example is characterized in that the location management apparatus further performs: transmitting, via a downlink channel, based on the reception of the status message, to the second radio terminal, at least one positioning message intended for the at least one first radio terminal.

Advantageously, the location management function uses the second radio terminal as a relay for serving the first radio terminal with information.

An aspect of the description is directed to the following subject matter: A method for operating a location management apparatus the method comprising: receiving, via an uplink channel, from a second radio terminal a status message indicating a detachment of a first radio terminal from a first cell, in particular from a first radio access node that is associated with the location management apparatus, and indicating a continuation of a sidelink positioning procedure.

According to a further aspect of the invention there is provided a computer program comprising instructions to cause the first radio terminal, or its embodiments, to execute the steps of the above-mentioned method for operating the first radio terminal, or its embodiments, and/or to cause the second radio terminal to execute the steps of the above-mentioned method for operating the second radio terminal, or its embodiments, and/or to cause the location management apparatus to execute the steps of the above-mentioned method for operating the location management apparatus, or its embodiments. Moreover, there is provided a computer-readable having stored thereon the above-mentioned computer program.

An aspect of the description is directed to the following subject matter: A use of one of said methods.
- Figures 1, 3, and 5: each depict an example of a method for operation a radio communications network in a schematic sequence diagram;
- Figures 2, 4, and 6: each depict a real-world example of the methods of figures 1, 3, and 5; and
- Figure 7: depicts a location management apparatus and two radio terminals in a schematic block diagram.

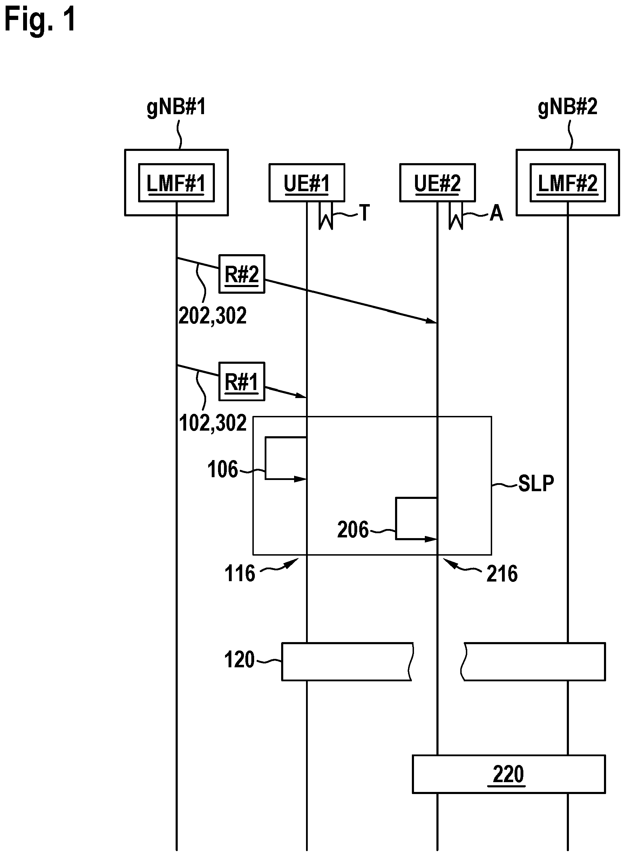

Figure 1 depicts a schematic sequence diagram. A location management apparatus LMF#1, that realizes a location management function, LMF, transmits 302 a request R#1, R#2 indicating that a first and second radio terminal UE#1, UE#2 attached to a first radio cell, in particular to a first radio access node gNB#1 takes part in at least one sidelink positioning procedure SLP. The sidelink positioning procedure involves said location management function, LMF, that is arranged together with the apparatus LMF#1 in a backhaul network.

Both, the first and second apparatuses receive 102, 202, via at least radio channel in particular via a downlink channel, from the location management apparatus LMF#1 or, alternatively, from a further second radio terminal, the request R#1, R#2.

After receiving the respective request R#1, R#2, the respective radio terminal UE#1, UR#2 starts 104, 204 the at least one sidelink positioning procedure SLP. As the location management function, LMF, is involved, the at least one sidelink positioning procedure SLP is started as a network-assisted sidelink positioning procedure.

At least one of UE#1, UE#2 detaches 106, 206 during the sidelink positioning procedure SLP from the first radio cell, in particular from the first radio access node gNB#1 associated with the location management function, LMF. The detaching 106, 206 is conducted upon a reception or activation of a handover trigger, wherein the handover trigger indicates a handover from the first radio cell, in particular from the first radio access node gNB#1, to a second radio cell, in particular to a second radio access node gNB#2.

At least one of UE#1, UE#2 terminates 116, 216 the at least one sidelink positioning procedure SLP. Said termination could involve the determination of the position of the respective radio terminal with a target role in the SLP. Said termination could also involve an abortion of the SLP due to a degradation of the sidelink channel.

After the termination, UE#1, UE#2 synchronize 120, 220 to the second radio cell, in particular to a second radio access node gNB#2 associated with a second location management function, LMF, and an associated second location management apparatus LMF#2. The synchronization is conducted upon termination of the at least one sidelink positioning procedure SLP.

The first and second radio access nodes, each provide a first or second radio cell, a first or second radio zone or a first or second radio beam. Therefore, the terms "radio cell", "radio zone", and "radio beam" can be used throughout this description interchangeably.

The wording "attachment" of a radio terminal to a radio access node is to be understood throughout the description as the radio terminal being in RRC_CONNECTED mode with respect to the respective radio access node.

During conditional handover, UE#1, UE#2 detaches from the source gNB#1 and applies, on synchronization with the other second cell, the stored corresponding configuration for the selected candidate second cell. According to this description, synchronization to that candidate second cell is sustained until the SLP terminates. After SLP termination, UE#1, UR#2 completes the RRC handover procedure by sending RRCReconfigurationComplete message to the target gNB#2. UE#1, UE#2 releases stored CHO configurations after successful completion of RRC handover procedure

The role of being a target UE involves that the position or location of the target UE is to be determined in the associated sidelink positioning procedure. The role of being an anchor UE involves that the position or location of the target UE is to be determined with the help of measurements initiated by and conducted by the anchor UE.

The sidelink location procedure SLP involves: A Nlmf_Location service enables a network function, NF, to request location determination (current geodetic and optionally local and/or civic location) for a target UE or to request periodic or triggered location for a target UE. The service operations defined for the Nlmf_Location service are as follows: Determine Location: It provides UE location information to the consumer NF; EventNotify: It notifies the consumer NF of an event for periodic or triggered location for a target UE; Cancel Location: It enables a consumer NF to cancel an ongoing periodic or triggered location for a target UE; and LocationContextTransfer: It enables a consumer NF to transfer location context information for periodic or triggered location of a target UE to a new location management function, LMF. The procedure 'Retrieve UE Location' allows a consumer NF to request the location information (geodetic location and, optionally, local and/or civic location) for a target UE or to activate periodic or triggered deferred location for a target UE.

The proposed solution forces UEs to be in out of coverage of their LMF during the handover timers. Until then, an exceptional procedure is considered for positioning using exceptional out of coverage procedure. During the exceptional time, the server UE (e.g., Target UE) is taking care of the positioning procedure.

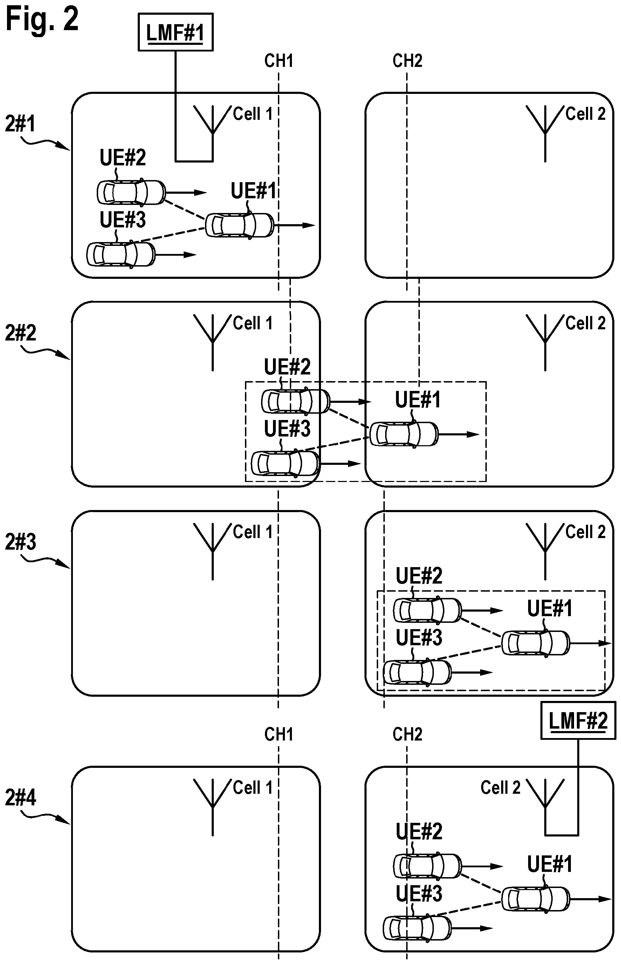

Figure 2 depicts an example of the procedure outlined in figure 1. The example is directed to a road situation where the position determination of the target UE is of importance for road safety applications. Therefore, UE#1-3 are depicts as road vehicles, in particular cars.

By definition, a UE out of coverage may be a UE not registered to the network or a UE temporarily unreachable. It may be in a known area, e.g. a factory or a campus, or not be in a known area, an application server may want to know its accurate location via a network or other server(s). When a UE is out of coverage, positioning directly over Uu is not possible, communication between the UE and 5GC/LMF is not possible, either. In direct communication between LMF and UE out of coverage can be assumed via another UE (via Sidelink) or non-3GPP connection. Since Network assisted Sidelink Positioning and/or Server UE assisted Positioning and/or Direct ranging between two UEs (requiring Ranging/Sidelink positioning between the Target UE and an Anchor UE), the two UEs have to be in proximity of each other within a valid range (could be, e.g., a communication range or a valid positioning range). The nodes involved are involved in a sidelink positioning procedure, preferably a session-based one. Inventive Variants:
According to the example shown in figure 2, all UEs UE#1-3 switch to Out-of-Coverage. At a state 2#1, all UEs UE#1-3 are in RRC_CONNECTED mode with respect to the first cell.

According to a state 2#2 there is a detection of handover, HO, and handover conditions, CH, of UE#1-3 involved in the SL positioning procedure requested during being in coverage of at least one cell, cell 1. This will affect the SLPP positioning procedure of at least Network assisted SL positioning.

Handover conditions could be triggered with: RSSI measurements, RSRP measurements, Location Based conditions, Time based conditions, Internal procedure of measurement (e.g., using radio-link failure (RLF) measurements and RLF timers), etc.

According to the state 2#2: The involved UEs UE#1-3 go out of coverage of the LMF LMF#1 and one UE, e.g. the target UE, shall become the server UE and takes care of the procedure until the end of the SL positioning procedure. The involved UEs UE#1-3 are going out of coverage for the duration of the HO for the same SLPP SL positioning request and, possibly, further associated request that belongs to the same SLPP SL positioning request.

According to state 2#3 UEs or radio terminals UE#1-3 are continuing SLP in out-of-coverage (being handled by the server UE#1 and disconnected from LMF#1). SLPP shall continue the condition as it is (Out-of-coverage), for all UEs involved the previous/finished HO, as long as the SLP request procedure is continuing/resumed/not finished.

In other words, the only temporary switch of the respective radio terminal like UE#1-3 to out of coverage is maintained until connecting to another cell or other radio access node.

According to state 2#4, at the end of the exceptional procedure, the involves UEs UE#1-3 are now in a new cell, e.g., cell 2 and are connected to the same (and new) LMF, e.g., LMF#2. Herewith, new requests can be triggered by SLPP as in-coverage and SLPP can convey messages (to/from) LMF2.

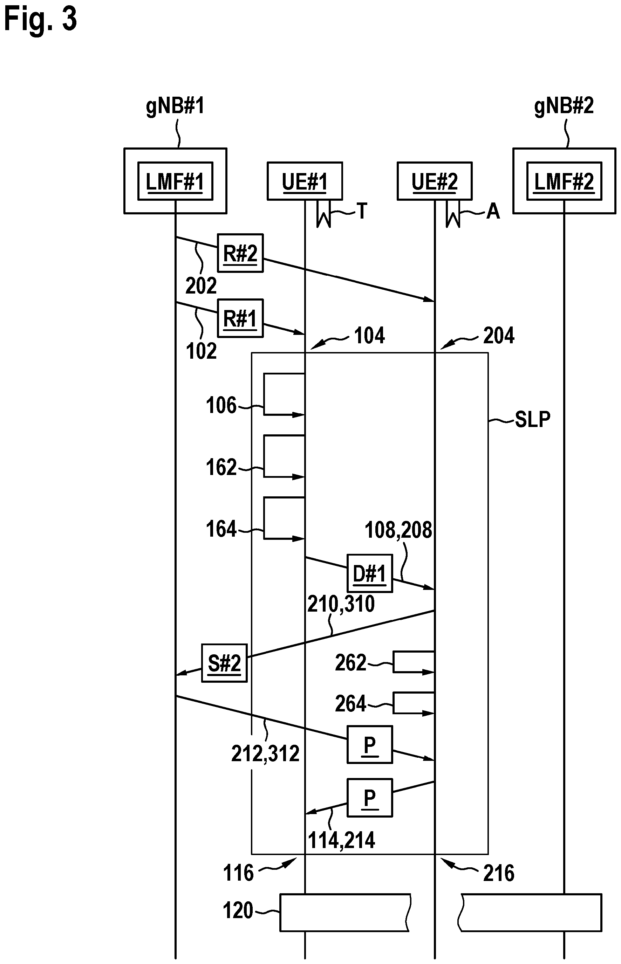

Figure 3 depicts a schematic sequence diagram. In contrast to figure 1, the method depicted in figure 3 involves that UE#1 as a target UE detaches from the first cell, wherein UE#2 as an anchor UE remains at least partly in-coverage with respect to the first cell.

After or before transmitting 108 a detachment message D#1 via the sidelink radio channel, UE#1 selects 162 the radio terminal with the target role T taking part in the sidelink positioning procedure SLP to be a server for the at least one sidelink positioning procedure SLP, and UE#1 selects 164, the at least one radio terminal with the anchor role A in the sidelink positioning procedure SLP to be a respective slave for the at least one sidelink positioning procedure SLP.

The detachment message D#1 indicates the detachment of the first radio terminal UE#1, from the first cell, in particular from the first radio access node gNB#1.

After receiving 208 the detachment message D#1 via the sidelink radio channel, UE#2 selects 262 the radio terminal with the target role T taking part in the sidelink positioning procedure SLP to be a server for the remaining at least one sidelink positioning procedure SLP, and UE#2 selects 264, the at least one radio terminal with the anchor role A in the sidelink positioning procedure SLP to be a respective slave for the remaining at least one sidelink positioning procedure SLP.

As UE#2 is still in an RRC_CONNECTED mode with respect to gNB#1, UE#2 transmits 210, via an uplink channel, a status message S#2 indicating the detachment at least of the first radio terminal UE#1 from the first cell, in particular from the first radio access node gNB#1, and indicating the continuation of the sidelink positioning procedure SLP together with the detached radio terminal UE#1.

The RRC_CONNECTED mode is a part of the Radio Resource Control, RRC, protocol in cellular networks, such as the 5G network with the gNB (Next-Generation NodeB). It represents a specific state within the User Equipment (UE), such as a smartphone or tablet. If the UE (User Equipment) is in RRC_CONNECTED Mode, the respective radio access node gNB has allocated specific radio resources for the UE, allowing it to communicate directly with the radio access node gNB. Since resources are already allocated, communication can occur with lower latency, resulting in a faster response time. The network actively tracks the UE's location, ensuring optimized routing of data and seamless handovers between cells if the UE is moving.

In contrast, when the UE is in RRC_IDLE mode, the network is not aware of its exact location, and no dedicated resources are allocated. This reduces energy consumption on the UE but also results in higher latency when transitioning back to RRC_CONNECTED mode.

The RRC_CONNECTED mode is critical for providing location management services, where low latency and a continuous connection are essential.

The UE in RRC_CONNECTED performs NR sidelink communication and/or V2X sidelink communication, as configured by the upper layers. The UE sends Sidelink UE Information to NG-RAN in order to request or release sidelink resources and report QoS information for each destination.

NG-RAN provides RRCReconfiguration to the UE in order to provide the UE with dedicated sidelink configuration. The RRCReconfiguration may include SL DRB configuration(s) for NR sidelink communication as well as mode 1 resource configuration and/or mode 2 resource configuration. If UE has received SL DRB configuration via system information, UE should continue using the configuration to perform sidelink data transmissions and receptions until a new configuration is received via the RRCReconfiguration.

NG-RAN may also configure measurement and reporting of CBR for NR sidelink communication and V2X sidelink communication, and reporting of location information for V2X sidelink communication to the UE via RRCReconfiguration.

During handover, the UE performs sidelink transmission and reception based on configuration of the exceptional transmission resource pool or configured sidelink grant Type 1 and reception resource pool of the target cell as provided in the handover command.

After receiving 310 the status message S#1, LMF#1 transmits 212, via the downlink channel, at least one positioning message P intended for the at least one first radio terminal UE#1 that is in detached mode.

After receiving 212 the at least one positioning message P, UE#2 transmits 214, via the sidelink channel, the at least one positioning message P towards the at least one first radio terminal UE#1 detached from the first cell.

After terminating 116, 216 the sidelink positioning procedure SLP, UE#1 synchronizes with the second cell in particular gNB#2 and goes into RRC_CONNECTED mode with respect to the second cell, wherein UE#2 remains in RRC_CONNECTED mode with respect to the first cell.

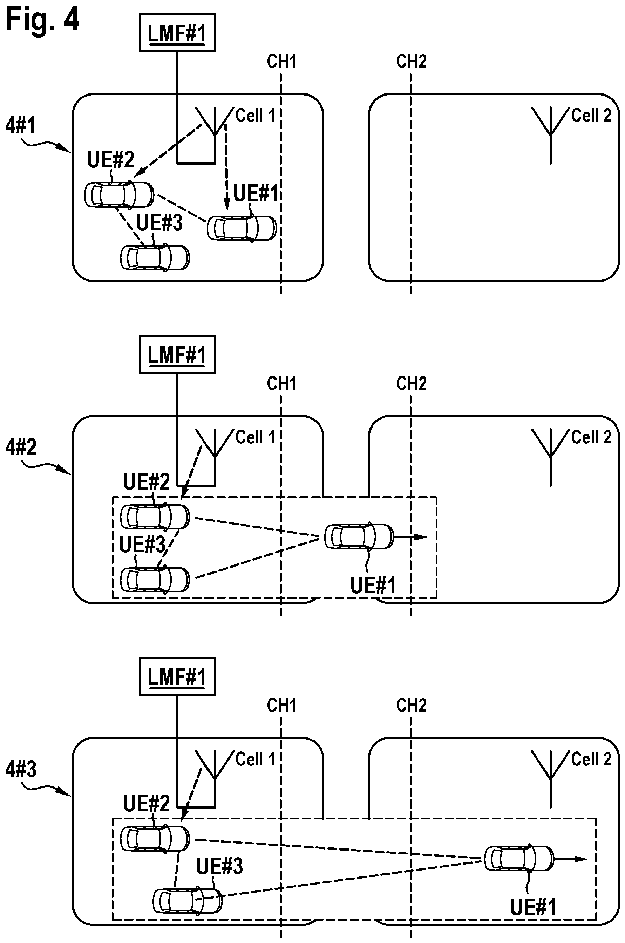

Figure 4 depicts an example of the procedure outlined in figure 3. According to state 4#1 the involved UEs UE#1-3 are in coverage of Cell 1 where every triggered SLP may be handled as in-coverage if requested. Wherein the SLPP starts with a network assisted positioning under the control of LMF. Herein, all measurements and final location computation should be conducted in the LMF and conveyed to requesting, originating, and/or terminating terminals via LMF and SLPP protocol.

According to state 4#2, target UE#1 starts/triggers its HO conditions in cell 1 base on the aforementioned HO conditions. Accordingly, the Target UE starts to lose its connection to cell-1 and/or LMF#1, which has been in control during initiating the SLPP SL positioning request.

Target UE starts/triggers its HO conditions in cell 1, starts to lose connection to cell 1 and/or LMF#1. Herewith, the target UE (or any other Anchor UE) triggers an exceptional Handover with partial coverage condition, i.e., having SLP still controlled by LMF#1 (e.g., through any Anchor UE connected to LMF#1) or by triggering out-of-coverage condition (e.g., by selecting a server UE).

According to Partial Coverage SLPP, the target UE#1 triggers an exceptional SL positioning Handover Status declaring a partial coverage condition, having Target UE in out of coverage of Cell-1 and LMF-1. HO triggering shall be conveyed to one or all Anchor UEs linked to the Target UE. After triggering Handover, an Anchor UE or all Anchor UEs send(s) to the LMF (initiated the SLPP) an "SLPP control update request" (SLPP-CUP-REQ), i.e., informing the LMF that Target UE is out of coverage during the rest of the SLPP procedure associated to the existing request. As long as One or more anchor UE(s) are in coverage of the Cell/LMF initiated the SLPP request, SLP procedure and all SLPP messages are still controlled by the same LMF, LMF#1. SLPP messages shall be conveyed to Target UE (if needed) through any of the Anchor UE (e.g., connected to LMF#1)

According to Out of Coverage SLPP, when HO conditions are triggered by the Target UE#1, an out-of-coverage condition may be requested from the Target UE to its Anchor UEs and, e.g., after the Target UE select itself as server UE. Target UE can continue controlling the SLPP protocol (as a Server UE) until SLP procedure of the given request is completed/finished. Anchor UE (any of them or all of them, which are in coverage) shall send an SLPP handover termination request to LMF#1 (SLPP request termination (SLPP-REQ- Termination)), i.e., informing LMF#1 that the Target UE will continue with the request as a server UE.

According to state 4#3, target UE continues to perform the initially requested SLPP (until it finishes) as out of coverage (according to Variant 2, Step-2, Option 2, with SLP controlled by the server UE/Target UE) or as partial coverage (SLP is controlled by the LMF initiated the SLPP request via any of the connected to anchors)

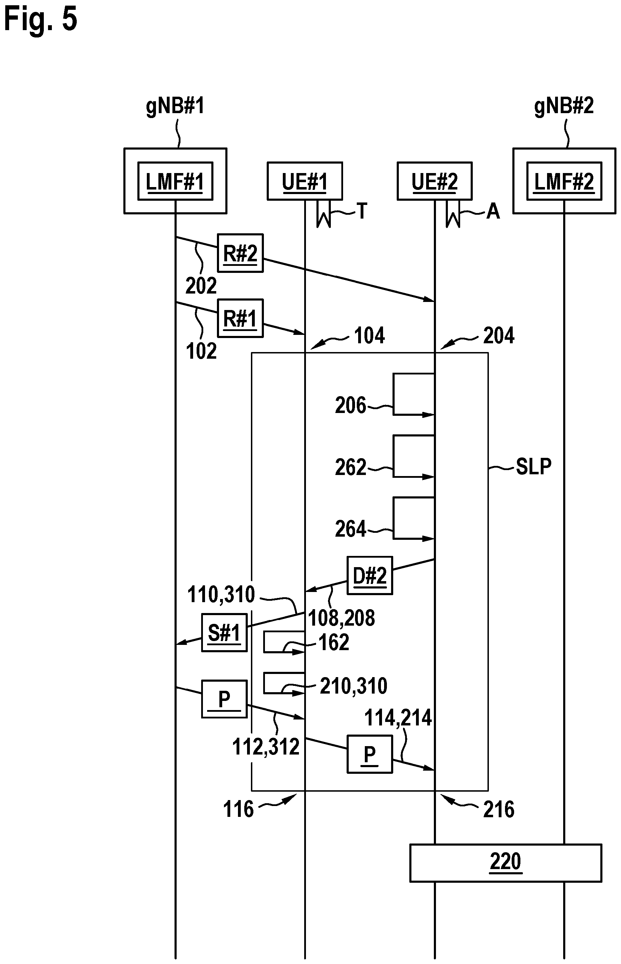

Figure 5 depicts a schematic sequence diagram. In contrast to figure 1, the method depicted in figure 5 involves that UE#2 as an anchor UE detaches from the first cell, wherein UE#1 as a target UE remains at least partly in-coverage with respect to the first cell.

After starting 204 the SLP, UE#2 detaches 206, during the sidelink positioning procedure SLP, from the first radio cell, in particular from the first radio access node gNB#1 associated with the location management function, LMF, upon a not shown reception or activation of a handover trigger, wherein the handover trigger indicates a handover from the first radio cell, in particular from the first radio access node gNB#1, to the second radio cell, in particular to a second radio access node gNB#2.

UE#2 transmits 208, via the sidelink radio channel, the detachment message D#2 indicating the detachment of UE#2 from the first cell, in particular from the first radio access node gNB#1.

After the reception 108 of D#2, UE#1 transmits 110, via the uplink channel, a status message S#1 indicating the detachment of UE#2 from the first cell, in particular from the first radio access node gNB#1, and indicating the continuation of the sidelink positioning procedure SLP involving UE#2 in the uncovered detached mode.

Depending on the reception of D#2, UE#1 selects 162 the radio terminal with the target role T in the at least one sidelink positioning procedure SLP to be a server for the remaining part of the at least one sidelink positioning procedure SLP. Further UE#1 selects 164 the at least one radio terminal with the anchor role A in the at least one sidelink positioning procedure SLP to be a respective slave for the remaining part of the at least one sidelink positioning procedure SLP.

After receiving 112, via the downlink channel, the at least one positioning message P intended for UE#2, UE#1 transmits 114, via the sidelink channel, the at least one positioning message P towards the at least one second radio terminal UE#2.

After terminating 216 the SLP, UE#2 switches to the second cell by synchronizing 220 to the second cell and going into RRC_CONNECTED mode with respect to the second cell, wherein UE#1 remains in RRC_CONNECTED mode with respect to the first cell.

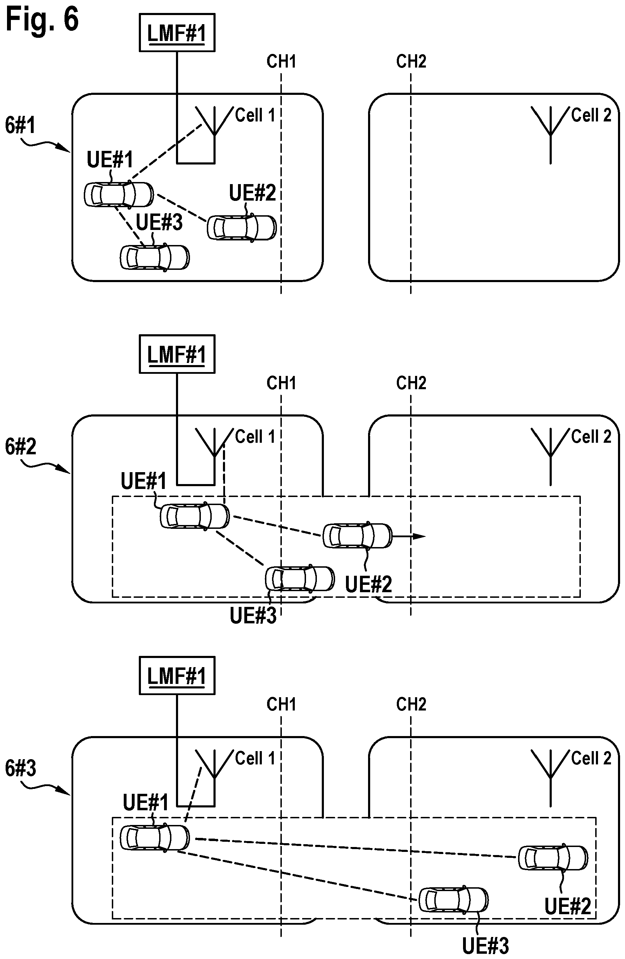

Figure 6 depicts an example of the procedure outlined in figure 5. According to state 6#1 the involved UEs UE#1-3 are in coverage of Cell 1 where every triggered SLP may be handled as in-coverage if requested

According to state 6#2 anchor UEs UE#2-3 are leaving the cell 1 coverage, triggering HO conditions at UE#2-3. Target UE#1 (assisted by Signaling over SL between Anchor UEs and itself) triggers either the partial or the out-of-cover case.

According to partial coverage, LMF#1 stays in control of SLP and SLP measurements are conveyed via SL communication to Anchor UEs (via Target UE). Target UE#1 stays in connection (and executing) the SLP lower layer messages and receives the SLPP procedure from the initiating LMF, LMF#1. According to an example, target UE#1 informs LMF#1 of the partial coverage status (having one or more Anchor UEs in out of coverage) via an "SLPP control update request" (SLPP-CUP- REQ).

According to Out-of-coverage, by selecting a server UE (e.g., the Target UE or any of the Anchor UEs) and SLPP messages are produced/controlled by the selected Server UE. The Target UE#1 decides to be Out of coverage/receives from the Anchor UE(s) the decision of Out of coverage, the target UE send to its LMF (initiating LMF) SLPP termination request (SLPP- Termination-REQ)

According to state 6#3, the Anchor UEs and the Target UE continue the given (same) SLP request using the same updated status (i.e., either partial coverage (option 1) or out of coverage (option 2)) until the SLP is concluded/finalized or SL links are terminated (e.g., SL range exceeds the coverage limit or RSRP/RSSI deteriorates).

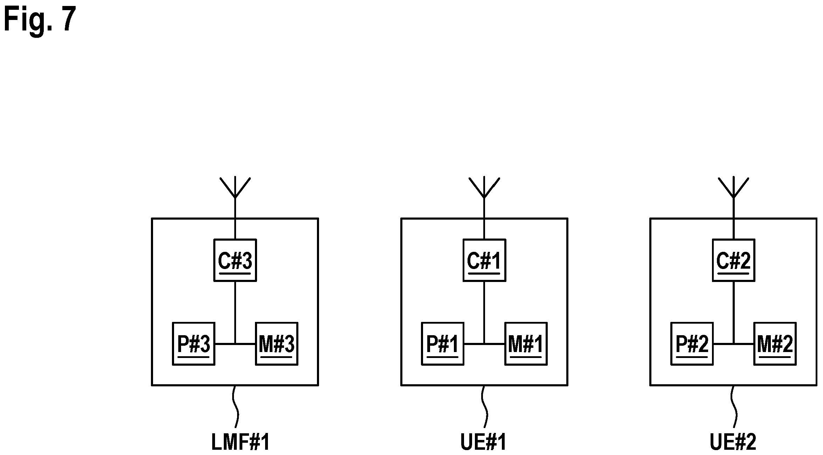

Figure 7 depicts in a schematic block diagram, that the location management apparatus LMF#1, the first and second radio terminal UE#1, UE#2, each comprise at least one processor P#1, P#2, P#3, at least one non-transitory memory M#1, M#2, M#3 including computer program code, and at least one radio communication module C#1, C#2, C#3 that comprises a respective antenna.

## Claims

1. A first radio terminal (UE#1, UE#2) comprising at least one processor; at least one memory including computer program code; and at least one radio communication module; the at least one processor, the at least one memory, the at least one computer program code, and the at least one radio communications module cause the first radio terminal (UE#1, UE#2) to perform at least:
receiving (102, 202), via at least radio channel, from a location management apparatus (LMF#1) or from a second radio terminal (UE#2, UE#1), a request (R#1, R#2) indicating that the first radio terminal (UE#1, UE#2) attached to a first radio access node (gNB#1) takes part in at least one sidelink positioning procedure (SLP);
starting (104, 204) the at least one sidelink positioning procedure (SLP), wherein the at least one sidelink positioning procedure (SLP) is started as a network-assisted sidelink positioning procedure;
detaching (106, 206), during the sidelink positioning procedure (SLP), from the first radio access node (gNB#1) associated with the location management function, LMF, upon a reception and/or activation of a handover trigger, wherein the handover trigger indicates a handover from the first radio access node (gNB#1) to a second radio access node (gNB#2);
terminating (116, 216) the at least one sidelink positioning procedure (SLP); and
synchronizing (120, 220) to the second radio access node (gNB#2), upon termination of the at least one sidelink positioning procedure (SLP).

2. The first radio terminal (UE#1, UE#2) according to claim 1, wherein the first radio terminal (UE#1, UE#2) further performs:
transmitting (108, 208), via a sidelink radio channel, a detachment message (D#1, D#2) indicating a detachment of the first radio terminal (UE#1, UE#2) from the first radio access node (gNB#1).

3. The first radio terminal (UE#1, UE#2) according to claim 1 or 2, wherein the first radio terminal (UE#1, UE#2) further performs:
receiving (114, 214), via the sidelink channel, at least one positioning message (P) from the second radio terminal (UE#2, UE#1), wherein the at least one positioning message (P) originates from the location management apparatus (LMF#1).

4. The first radio terminal (UE#1, UE#2) according to one of the preceding claims, wherein the first radio terminal (UE#1, UE#2) has a target role (T) in the at least one sidelink positioning procedure (SLP), wherein the at least one sidelink positioning procedure (SLP) is intended to determine location information indicating the position of the first radio terminal (UE#1, UE#2) that has the target role (T), wherein a or the at least one second radio terminal (UE#2, UE#1) has an anchor role (A) in the at least one sidelink positioning procedure (SLP).

5. The first radio terminal (UE#1, UE#2) according to one of the claims 1 to 3, wherein the first radio terminal (UE#1, UE#2) has an anchor role (A) in the at least one sidelink positioning procedure (SLP), wherein the at least one sidelink positioning procedure (SLP) is intended to determine location information indicating the position of a second radio terminal (UE#2, UE#1) that has a target role (T).

6. The first radio terminal (UE#1, UE#2) according to one of the claims 4 or 5, wherein the first radio terminal (UE#1, UE#2) further performs:
selecting (162, 262), upon detaching from the first radio access node (gNB#1), the radio terminal with the target role (T) taking part in the sidelink positioning procedure (SLP) to be a server for the at least one sidelink positioning procedure (SLP); and
selecting (164, 264), upon detaching from the first radio radio access node (gNB#1), the at least one radio terminal with the anchor role (A) in the sidelink positioning procedure (SLP) to be a respective slave for the at least one sidelink positioning procedure (SLP).

7. A method for operating a first radio terminal (UE#1, UE#2), the method comprising:
receiving (102, 202), via at least radio channel, from a location management apparatus (LMF#1) or from a second radio terminal (UE#2, UE#1), a request (R#1, R#2) indicating that the first radio terminal (UE#1, UE#2) attached to a first radio access node (gNB#1) takes part in at least one sidelink positioning procedure (SLP);
starting (104, 204) the at least one sidelink positioning procedure (SLP), wherein the at least one sidelink positioning procedure (SLP) is started as a network-assisted sidelink positioning procedure;
detaching (106, 206), during the sidelink positioning procedure (SLP), from the first radio access node (gNB#1) associated with the location management function, LMF, upon a reception or activation of a handover trigger, wherein the handover trigger indicates a handover from the first radio access node (gNB#1), to a second radio access node (gNB#2);
terminating (116) the at least one sidelink positioning procedure (SLP); and
synchronizing (120) the second radio access node (gNB#2), upon termination of the at least one sidelink positioning procedure (SLP).

8. A second radio terminal (UE#2, UE#1) comprising at least one processor; at least one memory including computer program code; and at least one radio communication module; the at least one processor, the at least one memory, the at least one computer program code, and the at least one radio communications module cause the second radio terminal (UE#1, UE#2) to perform at least:
receiving (202, 102), via at least one radio channel, from a location management function (LMF#1) or from a first radio terminal (UE#1), a request (R#2, R#1) indicating that the second radio terminal (UE#2) attached to a first radio access node (gNB#1), is taking part in at least one sidelink positioning procedure (SLP);
starting (204, 104) the at least one sidelink positioning procedure (SLP), wherein the at least one sidelink positioning procedure (SLP) is started as a network-assisted sidelink positioning procedure;
receiving (208, 108), via a sidelink radio channel, a detachment message (D#2, D#1) indicating a detachment of the first radio terminal (UE#1) from the first radio access node (gNB#1); and
terminating (216, 116) the at least one sidelink positioning procedure (SLP) with the at least one first radio terminal (UE#1) as a participant in the sidelink positioning procedure (SLP).

9. The second radio terminal (UE#2, UE#1) according to claim 8, wherein the second radio terminal (UE#2, UE#1) further performs:
transmitting (210, 110), via an uplink channel, a status message (S#2, S#1) indicating the detachment of the first radio terminal (UE#1, UE#2) from the first radio access node (gNB#1), and indicating the continuation of the sidelink positioning procedure (SLP).

10. The second radio terminal (UE#2, UE#1) according to claim 8 or 9, wherein the second radio terminal (UE#2, UE#1) further performs:
receiving (212, 112), via a downlink channel, at least one positioning message (P) intended for the at least one first radio terminal (UE#1, UE#2); and
transmitting (214, 114), via the sidelink channel, the at least one positioning message (P) towards the at least one first radio terminal (UE#1, UE#2).

11. The second radio terminal (UE#2, UE#1) according to one of the claims 8 to 10, wherein the second radio terminal (UE#1, UE#2) has a target role in the at least one sidelink positioning procedure (SLP), wherein the at least one sidelink positioning procedure (SLP) is intended to determine location information indicating the position of the second radio terminal (UE#2, UE#1) that has the target role, and wherein the at least one first radio terminal (UE#1, UE#2) has an anchor role in the at least one sidelink positioning procedure (SLP).

12. The second radio terminal (UE#2, UE#1) according to one of the claims 8 to 10, wherein the second radio terminal (UE#2, UE#1) has an anchor role in the at least one sidelink positioning procedure (SLP), wherein the at least one sidelink positioning procedure (SLP) is intended to determine location information indicating the position of the first radio terminal (UE#1, UE#2) that has a target role.

13. The second radio terminal (UE#2, UE#1) according to one of the claims 11 or 12, wherein the second radio terminal (UE#2, UE#1) further performs:
selecting (262, 162), upon reception of the detachment message (D#2, D#1), the radio terminal with the target role (T) in the at least one sidelink positioning procedure (SLP) to be a server for the at least one sidelink positioning procedure (SLP); and
selecting (264, 164), upon reception of the detachment message (D#2, D#1), the at least one radio terminal with the anchor role (A) in the at least one sidelink positioning procedure (SLP) to be a respective slave for the at least one sidelink positioning procedure (SLP).

14. A method for operating a second radio terminal (UE#2, UE#1), the method comprising:
receiving (202, 102), via at least one radio channel, from a location management function (LMF#1) or from a first radio terminal (UE#1), a request (R#2, R#1) indicating that the second radio terminal (UE#2) attached to a first radio access node (gNB#1), is taking part in at least one sidelink positioning procedure (SLP);
starting (204, 104) the at least one sidelink positioning procedure (SLP), wherein the at least one sidelink positioning procedure (SLP) is started as a network-assisted sidelink positioning procedure;
receiving (208, 108), via a sidelink radio channel, a detachment message (D#2, D#1) indicating a detachment of the first radio terminal (UE#1) from the first radio access node (gNB#1); and
terminating (216, 116) the at least one sidelink positioning procedure (SLP) with the at least one first radio terminal (UE#1) as a participant in the sidelink positioning procedure (SLP).

15. A location management apparatus (LMF#1) comprising at least one processor; at least one memory including computer program code; and at least one radio communication module; the at least one processor, the at least one memory, the at least one computer program code, and the at least one radio communications module cause the location management apparatus (LMF#1) to perform at least:
receiving (310), via an uplink channel, from a second radio terminal (UE#2, UE#1) a status message (S#2, S#1) indicating a detachment of a first radio terminal (UE#1, UE#2) from a first radio access node (gNB#1) that is associated with the location management apparatus (LMF#1), and indicating a continuation of a sidelink positioning procedure (SLP).

16. The location management apparatus (LMF#1) according to claim 15,
wherein the location management apparatus (LMF#1) further performs:
transmitting (312), via a downlink channel, based on the reception of the status message (S#2, S#1), to the second radio terminal (UE#2, UE#1), at least one positioning message (P) intended for the at least one first radio terminal (UE#1, UE#2).

17. A method for operating a location management apparatus (LMF#1), the method comprising:
receiving (310), via an uplink channel, from a second radio terminal (UE#2, UE#1) a status message (S#2, S#1) indicating a detachment of a first radio terminal (UE#1, UE#2) from a first radio access node (gNB#1) that is associated with the location management apparatus (LMF#1), and indicating a continuation of a sidelink positioning procedure (SLP).
